# EUROPÄISCHE PATENTANMELDUNG

(11) **EP 1 622 429 A1**
(43) Veröffentlichungstag der Anmeldung: **01.02.2006**
(21) Anmeldenummer: 05015394.9
(22) Anmeldetag: 15.07.2005
(51) Int. Cl.: H05B 33/10, H05B 33/12

(54) **Lichtemittierendes, transparentes Foliensystem auf Polymerbasis und Verfahren zu seiner Herstellung**

(30) Priorität: 28.07.2004 DE 102004036549
(71) Anmelder: Bayer MaterialScience AG, 51368 Leverkusen (DE)
(72) Erfinder: Wiessmeier, Georg, Dr., Tokyo 108-8571 (JP); Foltin, Eckard, 53489 Sinzig (DE); Röhner, Jürgen, 51069 Köln (DE)

(57) **Zusammenfassung**

Die Erfindung betrifft ein lichtemittierendes, transparentes, gegebenenfalls flexibles Foliensystem auf Polymerbasis, ein Verfahren zu dessen Herstellung sowie seine Verwendung.

## Beschreibung

Die Erfindung betrifft ein lichtemittierendes, transparentes, gegebenenfalls flexibles Foliensystem auf Polymerbasis, ein Verfahren zu dessen Herstellung sowie seine Verwendung.

In WO03/037031 und in US-A 5,780,965 werden lichtemittierende Foliensysteme beschrieben, die verformbar und hinterspritzbar sind. Dabei werden in einem ersten Herstellungsschritt das Grafikdesign, das Material für die vorderseitige, transparente Elektrode, das anorganische Leuchtmittel und das Material für die rückseitige Elektrode auf ein transparentes Substrat aufgedruckt. Bei direkter Anwendung dieses Foliensystems erfolgt die Isolierung der Rückseite z.B. durch eine Schutzfolie. Nach dem Druckprozess kann das System aber auch vorgeformt und dann in ein Spritzgusswerkzeug, in der das Hinterspritzen stattfindet, eingelegt werden. Über in geeigneter Weise an die Elektroden angebrachte Kontakte kann mit Hilfe eines Inverters ein Wechselspannungsfeld (z.B. 110 V, 400 Hz) angelegt und das Leuchtmittel zur Lichtemission angeregt werden. In US-A 5,780,965 wird als Material für die transparente Elektrode beispielsweise Indium-Zinnoxid (ITO) und in WO03/037031 beispielsweise Baytron® von der Firma H.C. Stark GmbH & Co. KG verwendet. Der Vorteil von Baytron® gegenüber ITO liegt in dessen besserer Verformbarkeit. Das Leuchtmittel - in der Regel handelt es sich dabei um dotierte Zinnoxide oder Zinnsulfide - wird in einer Paste dispergiert, die sich für ein Siebdruckverfahren eignet. Bislang werden diese Leuchtfoliensysteme im wesentlichen für kleinflächige Anwendungen verwendet. Dies liegt u.a. an der aufwändigen Herstellung, und den zu hohen Kosten.

Aufgabe war es daher, ein großflächiges, lichtemittierendes Foliensystem auf reiner Polymerbasis zur Verfügung zu stellen, welches auf einfache Art und Weise herzustellen ist.

Diese Aufgabe konnte durch das erfindungsgemäße Foliensystem gelöst werden.

Bei dem erfindungsgemäßen Foliensystem wird die Leuchtfunktionalität durch elektrolumineszierende Pigmente gewährleistet. Das erfindungsgemäße Foliensystem ist flexibel, verformbar und mit Polymeren hinterspritzbar. Darüber hinaus ist das erfindungsgemäße System transparent und kann daher in vielen Anwendungsbereichen eingesetzt werden.

Gegenstand der Erfindung ist ein lichtemittierendes, transparentes und flexibles Foliensystem auf Polymerbasis, welches dadurch gekennzeichnet ist, dass es folgenden Aufbau aufweist:
a) eine transparente Kunststofffolie
b) eine Beschichtung aus einer organischen, transparenten Elektrode, die sich auf der Innenseite der Kunststofffolie aus a) befindet,
c) eine sich an die Beschichtung aus b) anschließende, transparente Folie mit einer Dicke von 10 bis 200 µm, besonders bevorzugt von 20 bis 100 µm, aus thermoplastischem Polyurethan mit einer Härte von Shore A 75 bis Shore D 55 und elektrolumineszierenden Pigmenten in einer Menge von 5 bis 95 Gew.-%, besonders bevorzugt 10 bis 50 Gew.-%,
d) eine sich an die Schicht c) anschließende Beschichtung aus einer organischen, transparenten Elektrode, die sich auf der Innenseite der Kunststofffolie aus e) befindet,
e) eine transparente Kunststofffolie.

Ein weiterer Gegenstand der Erfindung ist ein Verfahren zur Herstellung des erfindungsgemäßen lichtemittierenden, transparenten und flexiblen Foliensystems auf Polymerbasis, welches dadurch gekennzeichnet ist, dass
a) zwei einseitig mit einem organischen transparenten Elektrodenmaterial auf der Innenseite beschichtete Kunststofffolien vorgelegt werden, wobei die jeweils beschichteten Innenseiten der Kunststofffolien einander gegenüber liegen,
b) ein elektrischer Kontakt auf Basis eines metallischen Leiters an der jeweiligen Beschichtung der Kunststofffolien angebracht wird,
c) zwischen die beiden transparenten, beschichteten Kunststofffolien aus b) eine transparente Folie mit einer Dicke von 10 bis 200 µm, besonders bevorzugt von 20 bis 100 µm, aus thermoplastischem Polyurethan mit einer Härte von Shore A 75 bis Shore D.55, bevorzugt von Shore A 75 bis Shore A 88 und 5 bis 95 Gew.-%, besonders bevorzugt von 10 bis 50 Gew.-%, elektrolumineszenten Pigmenten laminiert wird, wobei die Beschichtung der Kunststofffolien jeweils innen liegt.

Bei der eingesetzten transparenten Kunststofffolie handelt es sich vorzugsweise um eine Folie auf Basis von Polycarbonat, Polycarbonatblends, Polyester, thermoplastischen Elastomeren und thermoplastischem Polyurethan. Anstelle einer Kunststofffolie kann auch eine sogenannte Verbundfolie, bestehend aus mehreren Folien, eingesetzt werden.

Als organische, transparente Elektrode wird bevorzugt eine Elektrode auf Basis von Polyethylendioxythiophen eingesetzt. Andere transparente Elektrodenmaterialien sind beispielsweise Indiumzinnoxide (ITO), Polyanilin oder leitfähige Tinten. Die Elektrodenschicht sollte eine(n) elektrische(n) Leitfähigkeit/Oberflächenwiderstand von vorzugsweise 100 bis 1000 Ohm aufweisen.

Bei dem in der Folie aus thermoplastischem Polyurethan vorliegenden elektrolumineszenten Pigment handelt es sich um verkapselte oder unverkapselte, vorzugsweise um unverkapselte Elektrolumineszenz-Pigmente.

Bei der verwendeten thermoplastischen Polyurethanfolie handelt es sich vorzugsweise um eine aus thermoplastischem Polyurethan und dem elektrolumineszenten Pigment extrudierte Folie.

Das eingesetzte thermoplastische Polyurethan sollte eine Härte von Shore A 75 bis Shore D 55, bevorzugt von Shore A 75 bis Shore A 88, aufweisen.

Bei der Herstellung des erfindungsgemäßen Foliensystems wird in einer bevorzugten Ausführungsvariante folgendermaßen vorgegangen:
Zwei Kunststofffolien, beispielsweise Polycarbonatfolien, werden einseitig mit einem organischen, transparenten Elektrodenmaterial, beispielsweise mit Baytron® von der Firma H.C. Stark GmbH & Co. KG, beschichtet. Andere transparente Elektrodenmaterialien sind beispielsweise Indlumzinnoxide (ITO), Polyanilin oder leitfähige Tinten. Die Elektrodenschicht sollte eine(n) elektrische(n) Leitfähigkeit/Oberflächenwiderstand von vorzugsweise 100 bis 1000 Ohm aufweisen. Die beschichteten Folien werden getrocknet und mit einem Kontakt, zum Beispiel aus Leitsilber, versehen. Gleichzeitig wird ein elektrolumineszentes Pigment in ein thermoplastisches Polyurethan eingearbeitet und zu einer Folie extrudiert, die eine Dicke von 10 bis 200 µm, vorzugsweise von 20 bis 100 µm besitzt. Der Massenanteil an elektrolumineszierenden Pigmenten beträgt 5 bis 95 Gew.-%, vorzugsweise 10 bis 50 Gew.-%. Anschließend werden die zwei einseitig mit leitfähigem Polymer beschichteten Kunststofffolien, deren beschichtete Seiten sich gegenüber liegen, und die mit dem elektrolumineszenten Pigment versehene dazwischen liegende TPU-Folie, beispielsweise über einen Rollapplikator, laminiert. Die Laminierung erfolgt vorzugsweise bei erhöhter Temperatur (z.B. zwischen 80 und 150°C, besonders bevorzugt zwischen 100 und 130°C). Das so hergestellte Foliensystem kann für verschiedene Anwendungszwecke eingesetzt werden.

Die erfindungsgemäßen Foliensysteme können verformt und mit Kunststoffen hinterspritzt werden. Legt man an die Kontakte z.B. über einen Inverter eine Wechselspannung (z.B. 110 V, 400 Hz) an, so können die Foliensysteme als Leuchtsysteme (Leuchtfolien) oder die entsprechend verformten Systeme und gegebenenfalls hinterspritzten Formteile als leuchtende Bauteile verwendet werden.

Die Erfindung soll anhand des nachfolgenden Beispieles näher erläutert werden.

### Beispiel

Extrusion der elektrolumineszierenden TPU-Folie: 5 kg Desmopan® 588E der Firma Bayer MaterialScience AG (Shore Härte A= 88 entspricht einer Shore Härte D von 33) wurden über Nacht bei 100°C getrocknet. Dazu wurden 1 kg lumineszierendes Pigment (Lumilux Blau EL, Fa. Honeywell, Art. Nr. 54503) gegeben. Die Komponenten wurden ca. 30 Minuten in einem Trommelmischer gemischt, wobei die Pigmente am Kunststoffgranulat haften blieben. Die Extrusion erfolgte in einem Extruder (Dreizonenschnecke: Durchmesser von 37 cm und Länge von etwa 890 cm ohne Entgasung; Rotation von 20 U/min bei einer Stromaufnahme von 8A und einem Druck von 46 bar) der Firma Kuhne. Die Temperatur der Schmelze betrug 192 °C. Die Gieß- und die Kühlwalze hatten eine Temperatur von 15°C. Die Folienabzuggeschwindigkeit betrug 5,4 m/min. Die Folie hatte eine Breite von ca. 25 cm und eine Dicke von ca. 60 µm.

Beschichtung der Kunststofffolien mit einer leitfähigen Schicht: Zwei 125 µm dicke Polycarbonatfolien (aus Makrolon® der Bayer MaterialScience AG) wurden mit Baytron® F von der Firma H.C. Stark GmbH & Co. KG beschichtet. Die Nassfilmdicke betrug 24 µm. Die Trocknung des nassen Filmes erfolgte bei ca. 120°C. Das Resultat waren zwei Polycarbonatfolien, die einseitig mit dem genannten leitfähigen Polymer beschichtet waren. Der Oberflächenwiderstand betrug 330 Ohm.

Kontaktierung: Die Kunststofffolien wurden jeweils an der mit leitfähigem Polymer beschichteten Innenseite mit einem etwa 5 mm breiten Streifen aus Silberleitlack versehen.

Zusammenfügen der Folien und Laminierung der Kunststofffolien mit der elektrolumineszierenden TPU-Folie: Die Laminierung erfolgte in einer beheizbaren Presse bei 140°C unter einem Druck von 90 bar während einer Dauer von 8 Minuten. Die das lumineszierende Pigment enthaltende TPU-Folie wurde zwischen die innen mit dem leitfähigen Polymer beschichteten Kunststofffolien gelegt. Dabei wurden die beiden Kunststofffolien so versetzt angeordnet, dass jeweils der mit Silberleitlack versehene Streifen zur Kontaktierung frei blieb.

Test: Durch Anlegen einer Wechselspannung (230 V, 2500 Hz) wurde das Foliensystem zum Leuchten gebracht. Die erzielte Leuchtdichte beträgt 2,5 cd/m2 bei einem Abstrahlungsmaximum bei 456 nm.

## Patentansprüche

1. Lichtemittierendes, transparentes und flexibles Foliensystem auf Polymerbasis aus
a) einer transparenten Kunststofffolie
b) einer Beschichtung aus einer organischen, transparenten Elektrode, die sich auf der Innenseite der Kunststofffolie aus a) befindet,
c) einer sich an die Beschichtung aus b) anschließenden, transparenten Folie mit einer Dicke von 10 bis 200 µm, bevorzugt von 20 bis 100 µm, aus thermoplastischem Polyurethan mit einer Härte von Shore A 75 bis Shore D 55, bevorzugt von Shore A 75 bis Shore A 88 und elektrolumineszenten Pigmenten in einer Menge von 5 bis 95 Gew.-%, bevorzugt 10 bis 50 Gew.-%,
d) einer sich an die Schicht aus c) anschließenden Beschichtung aus einer organischen, transparenten Elektrode, die sich auf der Innenseite der Kunststofffolie aus e) befindet,
e) einer transparenten Kunststofffolie.

2. Verfahren zur Herstellung eines Foliensystems gemäß Anspruch 1, wobei
a) zwei einseitig mit einem organischen transparenten Elektrodenmaterial auf der Innenseite beschichtete Kunststofffolien vorgelegt werden, wobei die jeweils beschichteten Innenseiten der Kunststofffolien einander gegenüber liegen,
b) ein elektrischer Kontakt auf Basis eines metallischen Leiters an der jeweiligen Beschichtung der Kunststofffolien angebracht wird,
c) zwischen die beiden transparenten, beschichteten Kunststofffolien aus b) eine transparente Folie mit einer Dicke von 10 bis 200 µm, bevorzugt von 20 bis 100 µm, aus thermoplastischem Polyurethan mit einer Härte von Shore A 75 bis Shore D 55, bevorzugt von Shore A 75 bis Shore A 88 und elektrolumineszenten Pigmenten in einer Menge von 5 bis 95 Gew.-%, bevorzugt von 10 bis 50 Gew.-%, laminiert wird, wobei die Beschichtung der Kunststofffolien jeweils innen liegt.

3. Verwendung des Foliensystems gemäß Anspruch 1 als Leuchtsystem.
